# EUROPÄISCHE PATENTSCHRIFT

(11) **EP 1 311 646 B1**
(45) Veröffentlichungstag und Bekanntmachung des Hinweises auf die Patenterteilung: **03.08.2005**
(21) Anmeldenummer: 01960582.3
(22) Anmeldetag: 27.07.2001
(51) Int. Cl.: C09J 133/00, C09J 7/00

(54) **ABSCHNITT EINES KLEBESTREIFENS**
ADHESIVE STRIP SECTION
SEGMENT DE RUBAN ADHESIF

(30) Priorität: 27.07.2000 DE 10036616
(43) Veröffentlichungstag der Anmeldung: 21.05.2003
(73) Patentinhaber: tesa AG, 20253 Hamburg (DE)
(72) Erfinder: SCHULZE, Walter, 25421 Pinneberg (DE); ZIMMERMANN, Dieter, 21635 Jork (DE)
(74) Vertreter: Stubbe, Andreas
(86) Internationale Anmeldenummer: PCT/EP2001/008737
(87) Internationale Veröffentlichungsnummer: WO 2002/010305

(56) Entgegenhaltungen:
- EP-A- 0 761 793

## Beschreibung

Die Erfindung betrifft einen Abschnitt eines Klebestreifens, der durch Zug in Richtung seiner Verklebungsebene entklebt (gestrippt) werden kann.

Derartige Abschnitte sind bekannt und im Handel, etwa als "tesa Power Strips®" der Beiersdorf AG, oder als "command adhesive®" der 3M. Wegen deren begrenzter Wittungsstabilität sind auch bereits solche Abschnitte mit Klebern auf Acrylat-Basis beschrieben worden, so in **EP 761.793 A2,** siehe auch den weiteren dort zitierten Stand der Technik, oder auch in **WO 92/11332.**

Obwohl die Vorzüge von Selbstklebemassen auf Acrylat-Basis bekannt sind, insbesondere ihre ausgewogenen klebtechnischen Eigenschaften und ihre Alterungsbeständigkeit, so haben derartige Produkte mit Selbstklebemassen auf Acrylat-Basis doch beträchtliche Nachteile, die sich besonders in der praktischen Anwendung beim späteren Entkleben durch Zug (strippen) zeigen: Es kommt immer wieder zu Reißern, ohne dass klar ist, weshalb.

Besonders nachteilig ist es dabei, wenn der Reißer erst gegen Ende des Strip-Vorganges oder auch nur in Teilen des Klebestreifens auftritt, da dann die verbleibenden Teile in der Klebfuge verbleiben und nicht mehr beschädigungslos entfernt werden können, während bei einem Reißer zu Beginn ggf. noch der "Rest " zumindest teilweise aus der Fuge herausragen mag und erneut ergriffen werden, kann, um daran erneut zu ziehen. Um solche Art der unangenehmen Reißer aber handelt es sich leider meist bei den bisher bekannten Produkten.

Aufgabe der Erfindung war es, hier Abhilfe zu schaffen, insbesondere einen solchen Klebestreifen auf Acrylat-Basis zu schaffen, ganz auf Acrylat-Basis oder zumindest die Selbstklebemasse.

Demgemäss betrifft die Erfindung einen Abschnitt eines Klebestreifens, wie er näher in den Ansprüchen gekennzeichnet ist, wobei bevorzugte Ausgestaltungen in den Unteransprüchen beschrieben sind.

Als Träger kommen Folienträger oder solche aus Schaumstoff in Frage, wie sie im Stand der Technik für derartige Produkte bekannt sind, insbesondere gemäß EP 563.272, WO 95/06691, EP 816,459 oder WO 99/31193, insbesondere aber gemäß EP 761.793 A2.

Als Selbstklebemasse wird ebenfalls verwiesen auf den Stand der Technik dazu, auch den aus den zum Träger benannten Druckschriften, insbesondere aber sind solche gemäß DE 39 42 232 A1.

Zur Ausgestaltung der Abschnitte selbst wird wiederum sowohl auf die Handelsprodukte als geeignete Versionen verwiesen, als auch auf EP 696.628, EP 987.308 und EP 987.309.

Vorteilhaft wird beim Bestrahlen der Schnittkanten mit UV-Licht eine vereinzelte Form der Abschnitte gewählt, wie sie gemäß EP 834.396 erhältlich ist.

Die Verklebungsebenen, die sich mit einem erfindungsgemäßen Abschnitt eines Klebestreifens erzielen lassen, sind den bisher bekannt enüberlegen. Bei gutem Tack ist eine Vorbehandlung mit einem Reinigungstuch gemäß DE 198 13 081 nicht nötig, die erzielten Festigkeiten sind hervorragend und das spätere Strippen erfolgt ohne Reißer.

Besonders zeigen sich diese Vorteile bei dickeren Produkten, die mit üblichen Methoden nicht durchvernetzt werden können und bei denen demgemäss leicht Reste von Klebmasse in der Fuge verbleiben. Besonders bevorzugt sind demgemäss Abschnitte mit einer Gesamtdicke von mehr als 200 µm, insbesondere mehr als 400 µm und ganz besonders bei Abschnitten mit über 800 µm Dicke zeigt sich der Vorteil, der sich erfindungsgemäß erzielen lässt.

### Beispiel 1

### Herstellung:

Compoundierung gemäß Beispiel 1, DE 39 42 232 A1 im Doppelschnecken-Extruder bei 180° - 140°C und Extrusion mittels Breitschlitzdüse auf Trennpapier 200 µm dick. Einkaschieren von Folie oder Schaum. Weitere Extrusion auf Folie oder Schaum und Eindecken mit Trennpapier (200 µm dick).Beidseitige ESH-Bestrahlung gemäß Beispiel 11, DE 39 42 232 A1.

Dann folgt Rotationsstanzen und Vereinzeln gem. EP 834.396 und dann eine UV-Schnittkantenvernetzung unter einer Laborbestrahlungsanlage der Firma Eltosch, Hg Mitteldruck 120 W/cm, ohne Inertgas, Abstand Lampe-Abschnitt 30 cm, Förderband-Geschwindigkeit 10 m/min.

Geprüft wurden Stanzlinge vom Typ "Poster Strip", also mit spitz auslaufenden Klebflächen, mit und ohne die erfindungsgemäße UV-Schnittkantenvernetzung. Verklebt zwischen zwei Glasplatten zeigen sich Ausrisse, die in Fuge verbleiben, lediglich bei den Produkten "ohne", wobei zudem von diesen Produkten ein dünner Rand von Klebmasse nach dem Strippen verbleibt, der den Konturen des Produktes entspricht. Erfindungsgemäße Produkte hingegen ließen sich ohne Reißer und ohne Rückstände durch Zug entfernen.

## Patentansprüche

1. Abschnitt eines Klebstreifens, der
a) durch Ziehen in Richtung seiner Verklebungsebene rückstandsfrei und beschädigungslos entklebt werden kann
b) mit einer ESH-vemetzten Selbstklebemasse auf Acrylat-Basis beschichtet ist, die
c) mit einem Trennpapier oder einer Trennfolie abgedeckt ist und die
d) an den Schnittkanten des Abschnitts sichtbar ist,
**dadurch gekennzeichnet, dass**
e) die an den Schnittkanten des Abschnitts sichtbare Selbstklebemasse durch UV-Bestrahlung vernetzt ist.

2. Abschnitt nach Anspruch 1, **dadurch gekennzeichnet, dass** er beidseitig mit einer ESH-vemetzbaren Selbstklebemasse beschichtet ist und beide Selbstklebemassen mit einem Trennpapier oder einer Trennfolie abgedeckt sind.

3. Abschnitt nach Anspruch 1, **dadurch gekennzeichnet, dass** das Trennpapier oder die Trennfolie UV-Strahlung ganz oder teils von der Selbstklebemasse abhält.

4. Abschnitt nach Anspruch 1, **dadurch gekennzeichnet, dass** er einen für den Entklebungs-Vorgang geeigneten Träger aufweist, insbesondere eine Folie oder einen Schaum, wiederum bevorzugt auf Acrylat-Basis.

5. Abschnitt nach Anspruch 1, **dadurch gekennzeichnet, dass** die Selbstklebemasse eine Dicke von mehr als 60, insbesondere mehr als 80 µm aufweist.

6. Abschnitt nach Anspruch 4, **dadurch gekennzeichnet, dass** der Träger eine Dicke von mehr als 200, insbesondere mehr als 400 µm aufweist.

7. Verfahren zum Vernetzen der Selbstklebemasse an den Schnittkanten eines Abschnitts eines Klebestreifens nach einem der Ansprüche 1 - 6, **dadurch gekennzeichnet, dass** der Abschnitt UV-bestrahlt wird.

8. Verfahren nach Anspruch 7, **dadurch gekennzeichnet, dass** der Abschnitt unter einer UV-Lampe bestrahlt wird, indem er neben weiteren Abschnitten, jedoch in seitlichem Abstand von diesen, auf einem Förderband unter der Lampe durchgefahren wird, wobei das Förderband zugleich das Trennpapier oder die Trennfolie sein kann und wobei mehrere Abschnitte aufeinander gestapelt vorliegen können, worauf ggf. der Durchgang unter der Lampe wiederholt wird, gegebenenfalls auch mit veränderter Lage der Abschnitte wiederholt wird, um die an den Schnittkanten sichtbare Selbstklebemasse zu vernetzen.

## Claims

1. Adhesive strip section which
a) can be disbonded residuelessly and without damage by pulling in the direction of its bond plane
b) is coated with an EBC-crosslinked, acrylate-based self-adhesive composition which
c) is lined with a release paper or release film and which
d) is visible at the cut edges of the section,
**characterized in that**
e) the self-adhesive composition visible at the cut edges of the section is crosslinked by UV irradiation.

2. Section according to Claim 1, **characterized in that** it is coated on both sides with an EBC-crosslinkable self-adhesive composition and both self-adhesive compositions are lined with a release paper or release film.

3. Section according to Claim 1, **characterized in that** the release paper or release film keeps UV radiation wholly or partly from the self-adhesive composition.

4. Section according to Claim 1, **characterized in that** it has a backing suitable for the disbonding operation, in particular a film or foam, again preferably acrylate-based.

5. Section according to Claim 1, **characterized in that** the self-adhesive composition has a thickness of more than 60, in particular more than 80 µm.

6. Section according to Claim 4, **characterized in that** the backing has a thickness of more than 200, in particular more than 400 µm.

7. Process for crosslinking the self-adhesive composition at the cut edges of an adhesive strip section according to one of Claims 1-6, **characterized in that** the section is UV irradiated.

8. Process according to Claim 7, **characterized in that** the section is irradiated under a UV lamp by being passed beneath the lamp on a conveyor belt alongside further sections but at a lateral distance from said sections, the conveyor belt possibly being at the same time the release paper or release film and it being possible for two or more sections to be stacked atop one another, after which, if desired, the passage under the lamp is repeated, being repeated, if desired with the sections in a different position as well, in order to crosslink the self-adhesive composition which is visible at the cut edges.

## Revendications

1. Tronçon d'un ruban adhésif, qui
a) peut être décollé sans laisser de résidu et sans être endommagé par traction dans la direction de son plan de collage,
b) est revêtu d'une pâte adhésive à base d'acrylate réticulée par ESH, qui
c) est recouverte d'un papier de séparation ou d'un film de séparation et qui
d) est visible sur les bords de coupe du tronçon,
**caractérisé en ce que**
e) la pâte adhésive visible sur les bords de coupe du tronçon est réticulée par irradiation par UV.

2. Tronçon selon la revendication 1, **caractérisé en ce qu'**il est revêtu sur ses deux faces d'une pâte adhésive réticulable par ESH et que les deux pâtes adhésives sont recouvertes d'un papier de séparation ou d'un film de séparation.

3. Tronçon selon la revendication 1, **caractérisé en ce que** le papier de séparation ou le film de séparation protègent la totalité ou une partie de la pâte adhésive de l'irradiation par UV.

4. Tronçon selon la revendication 1, **caractérisé en ce qu'**il présente un support qui convient pour l'opération de décollage, en particulier un film ou une mousse, de nouveau de préférence à base d'acrylate.

5. Tronçon selon la revendication 1, **caractérisé en ce que** la pâte adhésive présente une épaisseur supérieure à 60 et en particulier supérieure à 80 µm.

6. Tronçon selon la revendication 4, **caractérisé en ce que** le support présente une épaisseur supérieure à 200 et en particulier supérieure à 400 µm.

7. Procédé de réticulation de la pâte adhésive sur les bords de coupe d'un tronçon d'un ruban adhésif selon l'une des revendications 1 à 6, **caractérisé en ce que** le tronçon est irradié par UV.

8. Procédé selon la revendication 7, **caractérisé en ce que** le tronçon est irradié sous une lampe à UV en étant placé en dessous de la lampe sur une bande transporteuse à côté d'autres tronçons mais à distance latérale de ceux-ci, la bande de transporteuse pouvant former en même temps le papier de séparation ou le film de séparation, plusieurs tronçons pouvant être empilés les uns sur les autres, le passage sous la lampe étant éventuellement répété, éventuellement également en modifiant la position des tronçons, pour réticuler la pâte adhésive visible sur les bords de coupe.
